# EUROPÄISCHE PATENTSCHRIFT

(11) **EP 2 080 977 B1**
(45) Veröffentlichungstag und Bekanntmachung des Hinweises auf die Patenterteilung: **11.08.2010**
(21) Anmeldenummer: 08165268.7
(22) Anmeldetag: 26.09.2008
(51) Int. Cl.: F28D 20/00, F28F 9/013, F24J 3/08

(54) **Verdampfer für einen Kältekreislauf**
Vaporiser for a refrigeration circuit
Evaporateur pour un cycle frigorifique

(30) Priorität: 21.01.2008 DE 102008005313
(43) Veröffentlichungstag der Anmeldung: 22.07.2009
(73) Patentinhaber: Schmidt, Werner, 49584 Fürstenau (DE)
(72) Erfinder: Schmidt, Werner, 49584 Fürstenau (DE)
(74) Vertreter: Bossmeyer, Jörg Peter

(56) Entgegenhaltungen:
- WO-A-2008/077584
- CH-A5- 610 093
- DE-A1- 2 928 893
- DE-U1-202006 010 244
- US-A- 5 054 541

## Beschreibung

Die Erfindung betrifft einen Verdampfer für einen Kältekreislauf nach dem Oberbegriff des Anspruchs 1. So ein Verdampfer ist aus der DE 20 2006 010 244 U bekannt.

Ein Verdampfer ist aus der US 4 741 388 bekannt, der zur Aufnahme von Erdwärme ins Erdreich eingebracht ist. Zur Stabilisierung der Spirale vor und während des Einbringens in das Erdreich ist es vorteilhaft, die Spirale an einer Halterung zu fixieren, da andernfalls die Spirale aus ihrer Form geraten könnte. Ist der Verdampfer im Erdreich angeordnet, so kann es aufgrund von Erdbewegungen und/oder thermischen Belastungen zu wechselnden Verspannungen zwischen der Rohrleitung und der Halterung kommen. Dies birgt die Gefahr von Beschädigungen der Rohrleitung und somit eines vorzeitigen Verschleißes des Verdampfers.

Ausgehend von diesem Stand der Technik liegt der Erfindung die Aufgabe zugrunde, solche Verspannungen zu vermeiden oder zumindest zu reduzieren.

Diese Aufgabe wird erfindungsgemäß mit einem Verdampfer nach Anspruch 1 gelöst. Bevorzugte Weiterbildungen sind in den Unteransprüchen gegeben.

Wird der erfindungsgemäße Verdampfer in das Erdreich eingebracht, so verrottet die Halterung in einem Zeitraum, der in Anbetracht der Lebensdauer der Rohrleitung vergleichsweise kurz ist. Nach dem Verrotten der Halterung kann es aber nicht mehr zu Verspannungen zwischen der Rohrleitung und der Halterung kommen, sodass eine darauf zurückzuführende Beschädigung der Rohrleitung nicht mehr auftreten kann. Die Halterung dient somit nur noch zur Formfixierung der Rohrleitung, bevor und während diese in das Erdreich eingebracht wird.

Das verrottbare Material ist bevorzugt ein im Erdreich biologisch abbaubares Material. Insbesondere handelt es sich bei dem Material um ein organisches Material. Die Halterung besteht bevorzugt aus Holz, insbesondere aus einem unbehandelten Holz, welches sich rasch im Erdreich abbaut. Für die Halterung sind aber auch andere Werkstoffe verwendbar, die eine Formfixierung der spiralförmig aufgewickelten Rohrleitung vor und während des Einbringens in das Erdreich ermöglichen und anschließend im Erdreich verrotten.

Die Rohrleitung ist bevorzugt eine Kältemittelleitung und besteht insbesondere aus Metall, wie z.B. Kupfer. Vorzugsweise ist die metallische Rohrleitung dabei, wie bei Kältemittelleitungen üblich, in ihrem Innern gereinigt, um z.B. Fett und/oder andere Verunreinigungen zu entfernen, die aufgrund der Herstellung von Rohrleitungen in der Regel vorhanden sind. Ferner weist die Rohrleitung insbesondere eine Schutzummantelung auf, die z.B. aus Kunststoff, insbesondere aus einem Weichschaum besteht. Als Kältemittel kann z.B. Propan, Kohlendioxid, Stickstoff, R412, R407C, R407A etc. eingesetzt werden.

Die Rohrleitung ist bevorzugt an der Halterung mit einem oder mit mehreren Befestigungsmitteln fixiert. Die Befestigungsmittel sind insbesondere als Draht oder als Kabelbinder oder dergleichen ausgebildet.

Die Halterung weist eine oder mehrere mit der Rohrleitung fest verbundene Leisten auf, die parallel oder im Wesentlichen parallel zueinander verlaufen. Die Leisten sind im Abstand zueinander, entlang einer Umfangskontur der durch die Rohrleitung gebildeten Spirale, angeordnet. Bei der Umfangskontur handelt es sich um die innere Umfangskontur der Spirale. Insbesondere sind die Leisten entlang und/oder rings eines Kreises angeordnet. Vorzugsweise handelt es sich bei den Leisten um Holzleisten. Die leisten sind voneinander getrennt und lediglich mittelbar über die Rohrleitung und/oder die Befestigungsmittel miteinander verbunden. Hierdurch kann die Halterung sehr kostengünstig ausgebildet werden, da Leisten, insbesondere Holzleisen, als Massenware auf dem Markt verfügbar sind.

Zwar fixieren die Befestigungsmittel die Rohrleitung an der Halterung, bei wechselnden Witterungseinflüssen kann es aber zu einer Lockerung der Verbindungen zwischen der Rohrleitung und der Halterung kommen. Insbesondere wenn die Halterung aus Holz besteht, kann sich das Holz verziehen. Somit besteht die Gefahr, dass die Rohrleitung, zumindest bereichsweise, relativ zur Halterung verrutschen kann. Gemäß einer Weiterbildung weist die Halterung und/oder die Rohrleitung daher eine oder mehrere Eingriffsmittel auf, in welche die Rohrleitung bzw. die Halterung eingreift. Dabei sind die Eingriffsmittel insbesondere an oder in den Leisten vorgesehen. Bei den Eingriffsmitteln handelt es sich bevorzugt um Kerben oder um andere Aufnahmen, die insbesondere einen radialen Toleranzausgleich zulassen, ohne dass die Halterung und die Rohrleitung außer Eingriff gelangen. Ein Verrutschen der Rohrleitung relativ zur Halterung ist damit weitgehend ausgeschlossen, sodass es möglich ist, den Verdampfer vorzufertigen und im Freien zu lagern. Selbst dann, wenn sich die Verbindungen zwischen der Rohrleitung und der Halterung lockern, bleibt durch das Eingreifen der Rohrleitung in die Eingriffsmittel bzw. Kerben die Formstabilität der durch die Rohrleitung gebildeten Spirale gewährleistet.

Die Erfindung betrifft ferner einen Kältekreislauf mit einem Verdampfer, der im Erdreich angeordnet ist. Bei diesem Verdampfer handelt es sich bevorzugt um einen erfindungsgemäßen Verdampfer, der gemäß allen in diesem Zusammenhang beschriebenen Ausgestaltungen weitergebildet sein kann. Der Kältekreislauf weist bevorzugt einen dem Verdampfer nachgeschalteten Verdichter auf, dem ein Verflüssiger oder Kondensator nachgeschaltet ist, dessen Ausgang unter Zwischenschaltung einer Drossel oder eines Expansionsventils mit dem Verdampfer verbunden ist.

Schließlich betrifft die Erfindung die Verwendung eines Verdampfers für einen Kältekreislauf. Bei diesem Verdampfer handelt es sich bevorzugt um einen erfindungsgemäßen Verdampfer, der gemäß allen in diesem Zusammenhang beschriebenen Ausgestaltungen weitergebildet sein kann. Ferner kann der Kältekreislauf, wie beschrieben, weitergebildet sein.

Die Erfindung wird nachfolgend anhand einer bevorzugter Ausführungsform unter Bezugnahme auf die Zeichnung beschrieben. In der Zeichnung zeigen:
- Fig. 1: eine perspektivische Ansicht eines Verdampfers gemäß einer Ausführungsform der Erfindung,
- Fig. 2: den Verdampfer nach Fig. 1 in einem im Erdreich eingelassenen Zustand,
- Fig. 3: ein schematisches Blockschaltbild eines Kältekreislaufes mit dem Verdampfer,
- Fig. 4:: einen Querschnitt durch die Kältemittelleitung und
- Fig. 5: eine Detailansicht einer Befestigung zwischen der Halterung und der Kältemittelleitung gemäß einer Weiterbildung der Ausführungsform.

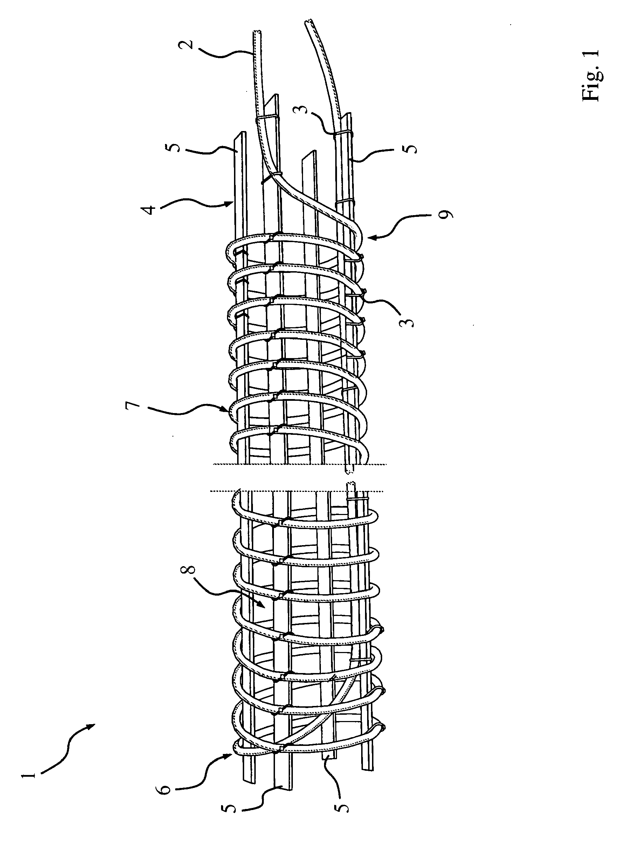

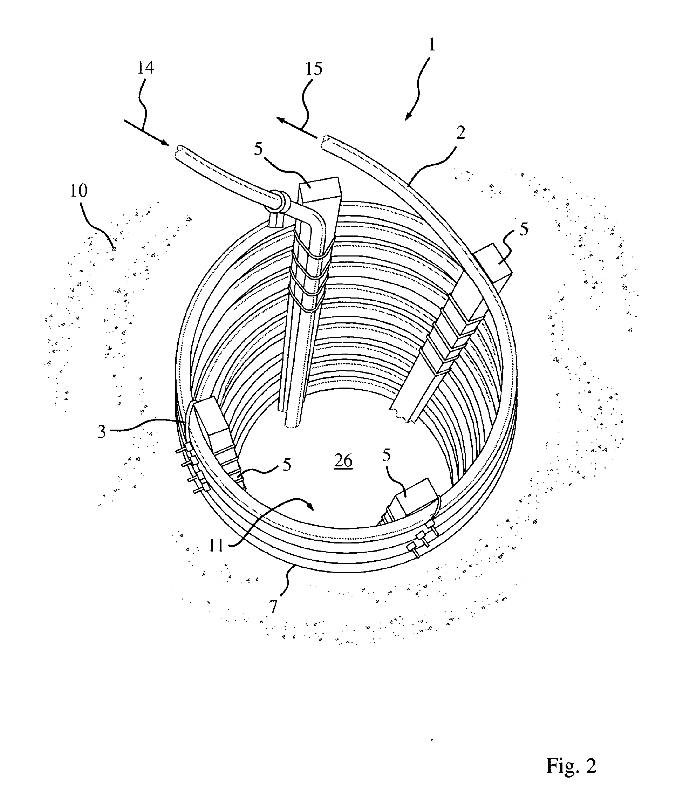

Aus Fig. 1 ist eine perspektivische Ansicht eines Verdampfers 1 gemäß einer Ausführungsform der Erfindung ersichtlich, bevor dieser ins Erdreich 10 (siehe Fig. 2) eingelassen wird. Der Verdampfer 1 weist eine spiralförmig aufgewickelte Kältemittelleitung 2 auf, die mittels Kabelbinder 3 an einer Halterung 4 fixiert ist, welche mehrere Leisten 5 umfasst, die parallel zueinander verlaufen und im Abstand zueinander rings eines Kreises angeordnet sind. Die Leisten 5 bestehen aus unbehandeltem Holz und können somit im Erdreich verrotten.

Am Ende 6 der durch die Kältemittelleitung 2 gebildeten Spirale 7 ist die Kältemittelleitung 2 in den Innenraum 8 der Spirale 7 eingeführt und an einer der Leisten 5 mittels Kabelbinder 3 fixiert. An dieser Leiste 5 wird die Kältemittelleitung 2 durch den Innenraum 8 der Spirale 7 hindurch in deren Längsrichtung bis zum Anfang 9 der Spirale 7 geführt und tritt dort aus dieser bzw. aus deren Innenraum 8 aus.

Aus Fig. 2 ist eine perspektivische Ansicht des Verdampfers 1 in einem im Erdreich 10 eingelassenen Zustand ersichtlich. Das im Erdreich 10 ausgehobene Loch 11, in dem der Verdampfer 1 bzw. die Spirale 7 sitzt, ist in dem aus Fig. 2 ersichtlichen teilmontierten Zustand lediglich teilweise mit Füllmaterial 26, wie z.B. Sand und/oder Erdreich, aufgefüllt. Im endmontierten Zustand ist das Loch 11 mit dem Füllmaterial 26 verfüllt und die Spirale 7 vollständig von Füllmaterial 26 und/oder Erdreich 10 abgedeckt.

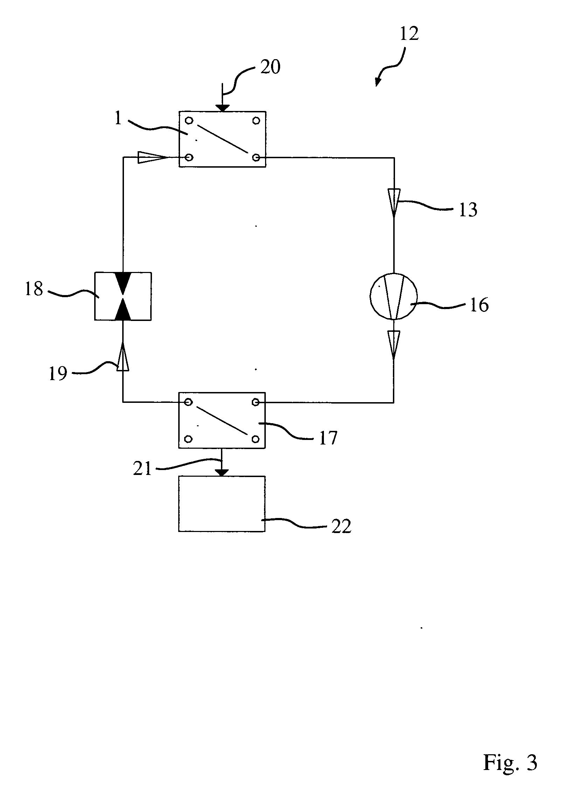

Der Verdampfer 1 wird an einen Kältekreislauf 12 (siehe Fig. 3) angeschlossen, sodass durch die Kältemittelleitung 2 strömendes Kältemittel 13 in Richtung des Pfeils 14 in die Spirale 7 eintreten, diese durchlaufen und anschließend in Richtung des Pfeils 15 wieder aus dem Verdampfer 1 austreten kann. Das Kältemittel 13 kann aber auch in die entgegengesetzte Richtung strömen. Ferner ist aus Fig. 2 erkennbar, dass die Leisten 5 im Abstand zueinander rings eines Kreises angeordnet sind.

Aus Fig. 3 ist ein schematisches Blockschaltbild des Kältemittelkreislaufs 12 ersichtlich, wobei dem Verdampfer 1 ein Verdichter 16 nachgeschaltet ist, dem ein Verflüssiger 17 nachgeschaltet ist. Der Ausgang des Verflüssigers 17 ist unter Zwischenschaltung eines Expansionsventils 18 mit dem Verdampfer 1 verbunden. Das Kältemittel 13 kann somit in Richtung der dargestellten Pfeile 19 in dem Kältekreislauf 12 zirkulieren. Dabei nimmt das Kältemittel 13 über den Verdampfer 1 Erdwärme 20 auf. In dem Verflüssiger 17 gibt das Kältemittel 13 Wärme 21 nach außen ab, sodass mit dem Verflüssiger 17 wenigstens ein Wärmeverbraucher 22 thermisch gekoppelt ist oder werden kann, der z.B. zum Beheizen eines Hauses genutzt wird. Dabei kann die thermische Kopplung zwischen dem Wärmeverbraucher 22 und dem Verflüssiger 17 unter Zwischenschaltung weiterer Kältekreisläufe und/oder Wärmekreisläufe erfolgen.

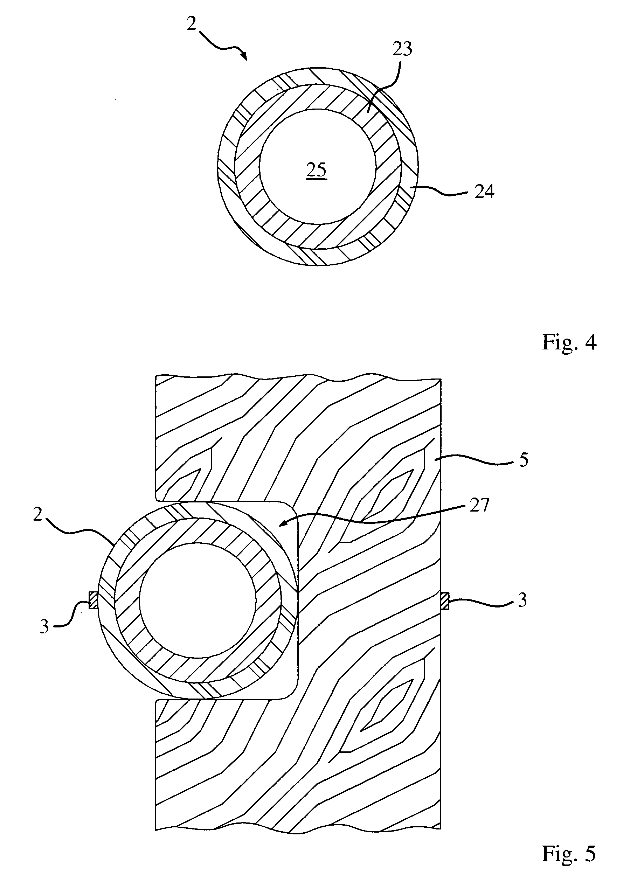

Aus Fig. 4 ist ein Querschnitt durch die Kältemittelleitung 2 ersichtlich, die einen Rohrkern 23 aus Kupfer aufweist, der von einer Schutzhülle 24 ummantelt ist. Im Betrieb des Verdampfers 1 strömt das Kältemittel 13 durch den Innenraum 25 des Rohrkerns 23.

Aus Fig. 5 ist eine Detailansicht einer Befestigung zwischen der Halterung 4 und der Kältemittelleitung 2 gemäß einer Weiterbildung ersichtlich, wobei in die Leiste 5 eine Kerbe 27 eingebracht ist, in welche die Kältemittelleitung 2 eingreift, die mit einem Kabelbinder 3 an der Leiste 5 befestigt ist. Mehrere Windungen oder jede Windung der Spirale 7 kann auf diese Weise an einer oder an mehreren der Leisten 5 befestigt sein.

### Bezugszeichenliste

- 1: Verdampfer
- 2: Kältemittelleitung
- 3: Kabelbinder
- 4: Halterung
- 5: Leiste
- 6: Ende der Spirale
- 7: Spirale
- 8: Innenraum der Spirale
- 9: Anfang der Spirale
- 10: Erdreich
- 11: Loch im Erdreich
- 12: Kältekreislauf
- 13: Kältemittel
- 14: Pfeil / Strömungsrichtung des Kältemittels
- 15: Pfeil / Strömungsrichtung des Kältemittels
- 16: Verdichter
- 17: Verflüssiger / Kondensator
- 18: Expansionsventil
- 19: Pfeil / Strömungsrichtung des Kältemittels
- 20: Erdwärme
- 21: Wärme
- 22: Wärmeverbraucher
- 23: Rohrkern
- 24: Schutzhülle
- 25: Innenraum des Rohrkerns
- 26: Hüllmaterial
- 27: Kerbe

## Patentansprüche

1. In das Erdreich einlassbarer Verdampfer für einen Kältekreislauf, mit einer spiralförmig aufgewickelten Rohrleitung (2), durch welche ein Kältemittel (13) strömt oder strömen kann und die in den Kältekreislauf (12) eingebaut ist oder werden kann, wobei eine oder mehrere Windungen der Rohrleitung (2) an einer Alterung (4) befestigt sind,
**dadurch gekennzeichnet, dass**
die Halterung (4) aus einem verrottbaren Material besteht und mehrere mit der Rohrleitung (2) fest verbundene Leisten (5) aufweist, die parallel oder im Wesentlichen parallel zueinander verlaufen und im Abstand zueinander entlang einer Umfangskontur der durch die Rohrleitung (2) gebildeten Spirale (7) angeordnet sind.

2. Verdampfer nach Anspruch 1,
**dadurch gekennzeichnet, dass**
die Halterung (4) aus Holz besteht.

3. Verdampfer nach Anspruch 1 oder 2,
**dadurch gekennzeichnet, dass**
die Rohrleitung (2) eine Kältemittelleitung ist.

4. Verdampfer nach einem der vorangehenden Ansprüche,
**dadurch gekennzeichnet, dass**
die Rohrleitung (2) an der Halterung (4) mit einem oder mehreren Befestigungsmitteln (3) fixiert ist, die als Draht oder als Kabelbinder ausgebildet sind.

5. Verdampfer nach einem der vorangehenden Ansprüche,
**dadurch gekennzeichnet, dass**
die Rohrleitung (2) aus Metall besteht.

6. Verdampfer nach einem der vorangehenden Ansprüche,
**dadurch gekennzeichnet, dass**
die Halterung (4) eine oder mehrere Kerben (27) aufweist, in welche die Rohrleitung (2) eingreift.

7. Verdampfer nach den Ansprüchen 5 und 6,
**dadurch gekennzeichnet, dass**
die Kerben (27) in den Leisten (5) vorgesehen sind.

8. Verdampfer nach einem der vorangehenden Ansprüche,
**dadurch gekennzeichnet, dass**
der Verdampfer (1) ins Erdreich (10) eingelassen ist.

9. Kältekreislauf mit einem Verdampfer (1) nach einem der vorangehenden Ansprüche, **dadurch gekennzeichnet, dass**
der Verdampfer (1) im Erdreich (10) angeordnet ist.

## Claims

1. Vaporiser, which can be let into the ground, for a refrigeration circuit, with a pipeline (2) coiled in spiral form, through which a refrigerant (13) flows or can flow and which is or can be integrated into the refrigeration circuit (12), wherein one or more windings of the pipeline (2) are attached to a holder (4),
**characterised in that**
the holder (4) is made of a decomposable material and comprises a plurality of strips (5) firmly connected to the pipeline (2) which run parallel or substantially parallel to one another and are arranged spaced apart from one another along a peripheral contour of the spiral (7) formed by the pipeline (2).

2. Vaporiser according to claim 1, **characterised in that** the holder (4) is made of wood.

3. Vaporiser according to claim 1 or 2, **characterised in that** the pipeline (2) is a refrigerant pipe.

4. Vaporiser according to any of the preceding claims, **characterised in that** the pipeline (2) is fixed to the holder (4) by one or more fixing means (3) which are formed as wire or as cable connectors.

5. Vaporiser according to any of the preceding claims, **characterised in that** the pipeline (2) is made of metal.

6. Vaporiser according to any of the preceding claims, **characterised in that** the holder (4) comprises one or more notches (27) in which the pipeline (2) engages.

7. Vaporiser according to claims 5 and 6, **characterised in that** the notches (27) are provided in the strips (5).

8. Vaporiser according to any of the preceding claims, **characterised in that** the vaporiser (1) is let into the ground (10).

9. Refrigeration circuit with a vaporiser (1) according to any of the preceding claims, **characterised in that** the vaporiser (1) is arranged in the ground (10).

## Revendications

1. Évaporateur destiné à être encastré dans la terre, pour un circuit de refroidissement, comportant une conduite tubulaire (2) enroulée en spirale, à travers laquelle circule ou peut circuler un fluide de refroidissement (13) et laquelle est montée ou peut être montée dans le circuit de refroidissement (12), une ou plusieurs spires de la conduite tubulaire (2) étant fixées à un support (4),
**caractérisé en ce que** le support (4) est réalisé dans un matériau dégradable et comporte plusieurs lattes (5), qui sont reliées de manière fixe à la conduite tubulaire (2) et qui s'étendent parallèlement ou sensiblement parallèlement les unes aux autres et sont disposées à distance les unes des autres le long d'un contour circonférentiel de la spirale (7) formée par la conduite tubulaire (2).

2. Évaporateur selon la revendication 1, **caractérisé en ce que** le support (4) est réalisé en bois.

3. Évaporateur selon la revendication 1 ou 2, **caractérisé en ce que** la conduite tubulaire (2) est une conduite de fluide de refroidissement.

4. Évaporateur selon l'une quelconque des revendications précédentes, **caractérisé en ce que** la conduite tubulaire (2) est fixée au support (4) par un ou plusieurs moyens de fixation (3), qui sont réalisés en forme de fil ou d'attache-câble.

5. Évaporateur selon l'une quelconque des revendications précédentes, **caractérisé en ce que** la conduite tubulaire (2) est réalisée en métal.

6. Évaporateur selon l'une quelconque des revendications précédentes, **caractérisé en ce que** le support (4) comporte une ou plusieurs rainures (27) dans lesquelles s'engage la conduite tubulaire (2).

7. Évaporateur selon les revendications 5 et 6, **caractérisé en ce que** les rainures (27) sont prévues dans les lattes (5).

8. Évaporateur selon l'une quelconque des revendications précédentes, **caractérisé en ce que** l'évaporateur (1) est encastré dans la terre (10).

9. Circuit de refroidissement avec un évaporateur (1) selon l'une quelconque des revendications précédentes, **caractérisé en ce que** l'évaporateur (1) est disposé dans la terre (10).
